(19) Europäisches Patentamt / European Patent Office / Office européen des brevets

(11) **EP 3 457 626 B1**

(12) **FASCICULE DE BREVET EUROPEEN**

(45) Date de publication et mention
de la délivrance du brevet:
**24.05.2023  Bulletin 2023/21**

(21) Numéro de dépôt: **18193579.2**

(22) Date de dépôt: **11.09.2018**

(51) Classification Internationale des Brevets (IPC):
**H04L 9/30** (2006.01)

(52) Classification Coopérative des Brevets (CPC):
**H04L 9/3066;** H04L 2209/12

(54) **MÉTHODE CRYPTOGRAPHIQUE SUR COURBES ELLIPTIQUES BINAIRES D'EDWARDS**

KRYPTOGRAPHISCHE METHODE AUF BINÄREN ELLIPTISCHEN EDWARDS-KURVEN

CRYPTOGRAPHIC METHOD ON BINARY EDWARDS ELLIPTIC CURVES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **13.09.2017  FR 1758474**

(43) Date de publication de la demande:
**20.03.2019  Bulletin 2019/12**

(73) Titulaire: **COMMISSARIAT A L'ENERGIE
ATOMIQUE ET AUX ENERGIES
ALTERNATIVES
75015 Paris (FR)**

(72) Inventeurs:
• **LOISEAU, Antoine
  38000 Grenoble (FR)**
• **FOURNIER, Jacques
  38000 Grenoble (FR)**

(74) Mandataire: **Brevalex
56, Boulevard de l'Embouchure
B.P. 27519
31075 Toulouse Cedex 2 (FR)**

(56) Documents cités:
• **KOZIEL BRIAN ET AL: "Low-Resource and Fast
Binary Edwards Curves Cryptography", 28
novembre 2015 (2015-11-28), ECCV 2016
CONFERENCE; [LECTURE NOTES IN
COMPUTER SCIENCE; LECT.NOTES
COMPUTER], SPRINGER INTERNATIONAL
PUBLISHING, CHAM, PAGE(S) 347 - 369,
XP047327672, ISSN: 0302-9743 ISBN:
978-3-319-69952-3 [extrait le 2015-11-28] * section
2 ***
• **DANIEL J BERNSTEIN ED - WALTER DIDIMO ET
AL: "Batch Binary Edwards", 16 août 2009
(2009-08-16), ECCV 2016 CONFERENCE;
[LECTURE NOTES IN COMPUTER SCIENCE;
LECT.NOTES COMPUTER], SPRINGER
INTERNATIONAL PUBLISHING, CHAM, PAGE(S)
317 - 336, XP047029910, ISSN: 0302-9743 ISBN:
978-3-319-69952-3 * section 3 ***
• **REZAEIAN FARASHAHI REZA ET AL:
"Differential Addition on Binary Elliptic Curves",
9 mars 2017 (2017-03-09), ECCV 2016
CONFERENCE; [LECTURE NOTES IN
COMPUTER SCIENCE; LECT.NOTES
COMPUTER], SPRINGER INTERNATIONAL
PUBLISHING, CHAM, PAGE(S) 21 - 35,
XP047406905, ISSN: 0302-9743 ISBN:
978-3-319-69952-3 [extrait le 2017-03-09] * section
2 ***
• **MICHAEL SCOTT: "Optimal Irreducible
Polynomials for GF(2^m) Arithmetic", IACR,
INTERNATIONAL ASSOCIATION FOR
CRYPTOLOGIC RESEARCH, vol.
20070530:160024, 30 May 2007 (2007-05-30),
pages 1-13, XP061002634, [retrieved on
2007-05-30]**

EP 3 457 626 B1

**Description**

**DOMAINE TECHNIQUE**

La présente invention concerne de manière générale le domaine de la cryptographie et plus particulièrement de la cryptographie sur courbes elliptiques. Elle trouve notamment application dans le domaine de l'Internet des Objets ou IoT (*Internet of Things*).

**ÉTAT DE LA TECHNIQUE ANTÉRIEURE**

La cryptographie sur courbes elliptiques ou ECC (*Elliptic Curve Cryptography*) est une technique de chiffrement économe en termes de longueur de clé et de temps de calcul, ce qui rend son utilisation particulièrement attractive dans les noeuds de l'Internet des Objets, pauvres en ressources par nature.

La cryptographie sur courbes elliptiques exploite la difficulté de résoudre le problème du logarithme discret ou DLP (*Discrète Logarithm Problem*) sur un groupe cyclique fini. Si l'on considère par exemple le groupe multiplicatif d'un corps fini $F_q$ (on notera dans la suite $F_q$ ou GF($q$) un corps fini à $q = p^m$ éléments où $p$ est un nombre premier et $m$ est un entier non nul), ce groupe est cyclique et le problème du logarithme discret de $z$ dans la base $x$ peut être défini comme la recherche du plus petit entier $k$ tel que $x^k = z$ où $x, z \in F_q^*$ .

De manière générale, une courbe elliptique $E$ sur un corps k est définie à partir d'une cubique à deux variables $x, y$ prenant leurs valeurs dans ce corps, à savoir l'ensemble des points (couples d'éléments de k) vérifiant l'équation de Weierstrass:

$$y^2 + a_1 xy + a_3 y = x^3 + a_2 x^2 + a_4 x + a_6 \qquad (1)$$

où $a_1,...,a_4,a_6 \in$ k. L'ensemble de ces points, complété par un point $\Omega$, dit point à l'infini, définit une courbe elliptique sur le corps k, notée $E$(k). On construit une opération d'addition affine sur $E$(k) telle que $E$(k) munie de cette opération forme un groupe additif. Pour un point $G$ appartenant à $E$(k), l'ensemble des éléments $\ell G$ avec $\ell$ entier est alors un sous-groupe cyclique de $E$(k). En pratique, la multiplication d'un point de $E$(k) par un scalaire (par exemple R), encore dénommée exponentiation par analogie avec un groupe multiplicatif, est décomposée en des opérations élémentaires de doublement (calcul de 2$G$) et d'addition, plus simples à effectuer.

Si l'on considère le cas d'un corps fini k = $F_q$, un cryptosystème sur courbe elliptique sur $F_q$ est caractérisé par un ensemble de paramètres, ($q,a_1...,a_4,a_6,G,n,h$), encore dénommés paramètres de domaine, où $q, a_1,...,a_4,a_6$, sont des paramètres précédemment définis, $G$ est un point générateur, $n$ est l'ordre de $G$ dans le groupe additif $E(F_q)$,

$$h = \frac{|E(F_q)|}{n}$$

est le cofacteur de $G$ dans ce groupe, $|E(F_q)|$ est l'ordre du groupe $E(F_q)$.

Une clé privée $d$ peut alors être choisie parmi les entiers [1,$n$-1], la clé publique correspondante étant donnée par les coordonnées $Q = dG$. La recherche de la clé privée à partir de la clé publique et du point générateur $G$, ou problème ECLDP (*Elliptic Curve Discrete Logarithm Problem*), est plus ardue que le problème DLP sur les corps finis et, dans l'état actuel, impossible à résoudre dans un temps polynomial.

On pourra trouver une présentation de la cryptographie sur courbes elliptiques dans l'ouvrage de D. Hankerson, A. Menezes et S. Vanstone intitulé « Guide to Elliptic Curve Cryptography » publié en 2004 aux éditions Springer.

En pratique, les courbes actuellement utilisées en cryptographie sur courbes elliptiques appartiennent à la famille des courbes de Weierstrass données par (1) où k est un corps fini $F_p$ et $p$ est un grand nombre premier, ou bien où k est un corps d'extension de $F_2$, soit $F_{2m}$. Dans ce dernier cas, l'équation de Weierstrass se réduit à :

$$y^2 + xy = x^3 + ax^2 + b \qquad (2)$$

avec $a,b \in$ k. Pour des questions de commodité d'implémentation, on opte généralement pour le corps d'extension binaire $F_{2m}$ (une division par 2 étant alors implémentée par un simple décalage). L'élément neutre de $E_W(F_p)$ ou de $E_W(F_{2m})$ est un point à l'infini $\Omega$.

La cryptographie sur courbes elliptiques est notamment utilisée dans la méthode de signature numérique ECDSA (*Elliptic Curve Digital Signature Algorithm*), normalisée par le NIST (*National Institute of Standards and Tech-*

*nology*).

Plus récemment, une nouvelle famille de courbes elliptiques, dites courbes d'Edwards a été introduite, ces courbes étant définies sur un corps $F_p$ où $p$ est un grand nombre premier :

$$x^2 + y^2 = 1 + dx^2 y^2 \qquad (3)$$

avec $d \in F_p$. L'ensemble des points $P$ appartenant à une courbe d'Edwards peut être muni d'une loi d'addition affine lui conférant une structure de groupe additif. Toutefois, les calculs dans $F_p$ sont complexes à implémenter et leur protection contre les attaques par canaux auxiliaires s'avère délicate. Il convient de noter que les courbes définies par (3) ne sont pas elliptiques sur un corps de caractéristique 2, autrement dit ne sont pas applicables à un corps d'extension binaire $F_{2m}$.

Pour remédier à ces inconvénients, une famille de courbes elliptiques sur un corps d'extension binaire $F_{2m}$ a été proposée dans l'article de D.J. Bernstein et al. intitulé « Binary Edwards Curves », Lecture Notes in Computer Science, vol. 514 LNCS, pp. 244-265, 2008, définie par :

$$d_1(x + y) + d_2(x^2 + y^2) = xy + xy(x + y) + x^2 y^2 \qquad (4)$$

où $d_1, d_2 \in F_{2m}$ avec $d_1 \neq 0$ et $d_2 \neq d_1^2 + d_1$. Ces courbes sont encore connues sous leur acronyme « BEC ».

L'addition affine de deux points $P_1$ et $P_2$ de coordonnées respectives $(x_1, y_1)$ et $(x_2, y_2)$ d'une BEC est un point $P_3$, de coordonnées $(x_3, y_3)$, définies par :

$$x_3 = \frac{d_1(x_1 + x_2) + d_2(x_1 + y_1)(x_2 + y_2) + (x_1 + x_1^2)(x_2(y_1 + y_2 + 1) + y_1 y_2)}{d_1 + (x_1 + x_1^2)(x_2 + y_2)} \qquad (5\text{-}1)$$

$$y_3 = \frac{d_1(y_1 + y_2) + d_2(x_1 + y_1)(x_2 + y_2) + (y_1 + y_1^2)(y_2(x_1 + x_2 + 1) + x_1 x_2)}{d_1 + (y_1 + y_1^2)(x_2 + y_2)} \qquad (5\text{-}2)$$

Le point $P_3$ appartient à la courbe en question, les dénominateurs figurant en (5-1) et (5-2) ne pouvant être nuls en raison des conditions sur $d_1$ et $d_2$. L'opération d'addition affine confère à l'ensemble des points de la BEC, dont les coordonnées appartiennent à $F_{2m}$, une structure de groupe additif, noté dans la suite $E_{BEC}(F_{2m})$.

On notera en outre le caractère symétrique en $x$ et $y$ de l'équation (4) et le fait que les expressions (5-1) et (5-2) se déduisent l'une de l'autre par cette symétrie. Ceci a pour conséquence que si un point $P(x, y)$ appartient à $E_{BEC}(F_{2m})$, son symétrique $P'(y,x)$ lui appartient également. On peut d'ailleurs montrer à partir des expressions (4),(5-1) et (5-2) que $P'+P=0$, autrement dit que $P'$ est l'inverse de $P$ dans le groupe additif $E_{BEC}(F_{2m})$ et que l'élément neutre de ce groupe n'est autre que le point neutre $O$ de coordonnées $(0,0)$. On peut en outre montrer que la courbe binaire d'Edwards est isomorphe (ou bi-rationnellement équivalente) à une courbe de Weierstrass, le point neutre $O$ de la première correspondant au point infini $\Omega$ de la seconde.

On pourra trouver une introduction aux courbes binaires d'Edwards dans la thèse de B. Koziel initulée « Low-resource and fast elliptic curve implementations over Binary Edwards Curves », Rochester Institute of Technology, 2016.

Un cas particulier de courbe BEC permet de simplifier la multiplication d'un point par un scalaire. En effet, les expressions (5-1) et (5-2) nécessitent de nombreuses opérations (calculs de carrés, multiplications, et inversions notamment) dans le corps $F_{2m}$. Lorsque $d_1 = d_2 = d$, la courbe BEC, alors notée $E_d$ se simplifie comme suit:

$$d(x + x^2 + y + y^2) = xy + xy(x + y) + x^2 y^2 = (x + x^2)(y + y^2) \qquad (6)$$

où $d$ est tel que $\nexists t \in F_{2m}$ tel que $d = t^2 + t$. On notera dans la suite $E_d(F_{2m})$ le groupe additif $E_{BEC}(F_{2m})$ lorsque la BEC est sous la forme (6). Dans ce cas, il est possible d'effectuer une addition différentielle, c'est à dire de calculer la somme $Q+P$ de deux points $P,Q$ de $E_d(F_{2m})$ à partir des coordonnées des points $Q,P$ et de leur différence $P-Q$, comme décrit par exemple dans l'article de D.J. Bernstein précité.

Toutes les courbes BEC ne présentent pas le même degré de sécurité vis-à-vis d'attaques potentielles ni se prêtent à une implémentation de manière équivalente.

L'article de D.J. Bernstein intitulé « Batch binary Edwards » publié dans Lecture Notes in Computer Science, vol. 5677 LNCS, pp. 317-336, 2009 énumère une liste de conditions à remplir pour qu'une méthode cryptographique sur une courbe BEC simplifiée (c'est-à-dire définie par l'expression (6)) offre un niveau élevé de sécurité. Il est notamment préconisé de choisir un degré d'extension $m$ égal à un nombre premier pour se prémunir contre les attaques dites GHS (Galbraith, Hess et Smart) et de choisir une courbe telle que l'ordre du groupe $E_d(F_{2^m})$ ainsi que l'ordre du groupe additif sur la tordue quadratique(quadratic *twist of the curve*), $E_d^{tw}$, associée à la courbe $E_d$, soient chacun proches d'un nombre premier à un faible facteur multiplicatif près. De manière générale, on rappelle que la tordue quadratique d'une courbe elliptique $E$ sur un corps k est une courbe elliptique isomorphe à $E$ sur une clôture algébrique de k , c'est-à-dire une extension algébrique de k algébriquement close.

Toutefois, la courbe BEC sur le corps $F_{2251}$ proposée dans l'article « Batch binary Edwards » ne permet pas d'atteindre le niveau de sécurité de 128 bits préconisé par le NIST et n'est pas non plus optimisée en termes de rapidité de calcul. On rappelle que le niveau de sécurité d'un chiffrement sur courbe elliptique $E(F_q)$ est défini comme

$$\frac{1}{2}\log_2\left(\left\|E(F_q)\right\|\right)$$

(taille de la courbe divisée par 2).

L'objet de la présente demande est par conséquent de proposer une méthode cryptographique sur courbe BEC qui présente un niveau de sécurité élevé, une rapidité de calcul supérieure à celle de l'état de la technique et qui se prête bien à une implémentation sur une architecture matérielle à 32 bits ou 64 bits.

## EXPOSÉ DE L'INVENTION

La présente invention est définie par une méthode cryptographique sur une courbe binaire d'Edwards telle que revendiquée en revendication 1. Un mode avantageux de réalisation est précisé en revendication 2.

## BRÈVE DESCRIPTION DES DESSINS

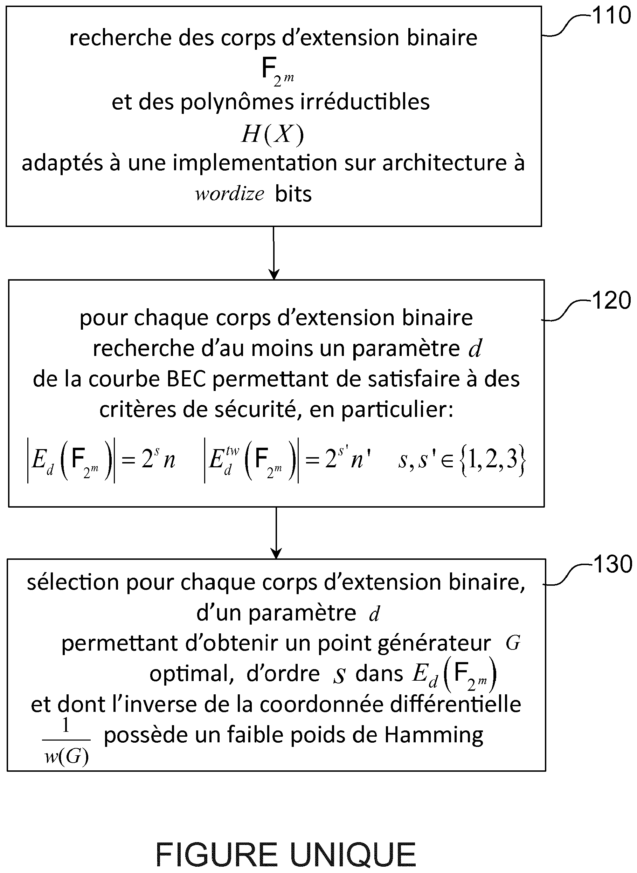

D'autres caractéristiques et avantages de l'invention apparaîtront à la lecture d'un mode de réalisation préférentiel de l'invention, fait en référence à la Figure unique représentant de manière schématique un processus de sélection des paramètres d'une méthode cryptographique sur une courbe binaire d'Edwards selon un mode de réalisation de l'invention.

## EXPOSÉ DÉTAILLÉ DE MODES DE RÉALISATION PARTICULIERS

Nous considérons dans la suite une méthode cryptographique sur une courbe elliptique, la courbe elliptique étant une courbe binaire d'Edwards simplifiée $E_d$, c'est-à-dire dont les points vérifient la relation (6). L'ensemble des points de la courbe, dont les coordonnées appartiennent à $F_{2^m}$, muni de la relation d'addition affine définie par (5-1) et (5-2), avec $d_1 = d_2 = d$, possède une structure de groupe additif, $E_d(F_{2^m})$.

Par méthode cryptographique sur courbe elliptique on entend notamment une méthode de chiffrement, une méthode de déchiffrement, une méthode de génération d'un couple (clé privée, clé publique), une méthode d'échange de clés selon un protocole Diffie-Hellmann, une méthode de signature électronique etc., faisant appel à au moins une primitive cryptographique dans laquelle un entier $k$ est transformé en un point $kP$ où $P$ est un point de ladite courbe elliptique. Autrement dit, ladite méthode cryptographique fait appel à au moins une opération d'exponentiation dans le groupe $E_d(F_{2^m})$.

L'idée à la base de l'invention est de sélectionner les paramètres de la méthode cryptographique sur courbe BEC en fonction d'un certain nombre de critères de sécurité, de facilité d'implémentation, et de rapidité de calcul.

Dans une première étape, on recherche les corps d'extension binaire $F_{2^m}$ et les polynômes irréductibles associés, se prêtant bien à des calculs arithmétiques au moyen d'une architecture matérielle 32 ou 64 bits. Par architecture matérielle à 32 ou 64 bits, on entend que la taille des registres et/ou des bus de données est de 32 ou 64 bits. Par exemple, une telle architecture matérielle sera présente dans un cryptoprocesseur 32 ou 64 bits.

Pour chaque nombre premier $a$ compris dans un intervalle $[a_{min}, a_{max}]$ où $a_{min}$ est une valeur minimale prédéterminée correspondant au niveau de sécurité minimal souhaité et $a_{max}$ est une valeur maximale prédéterminée, on recherche les polynômes irréductibles dans $F_2[X]$ de degré $a$ et de forme trinomiale :

$$H(X) = X^a + X^b + 1 \tag{7-1}$$

dans laquelle les degrés des monômes vérifient :

$$a - b = 0\left[wordsize\right] \tag{7-2}$$

où *wordsize* est la taille en nombre de bits des registres dans l'architecture matérielle de l'implémentation souhaitée. Par exemple *wordsize* = 32 ou 64 selon que l'on recherche une implémentation sur 32 ou 64 bits.

On choisira avantageusement $a_{min}$ = 256 de manière à pouvoir atteindre le niveau de sécurité minimal de 128 bits préconisé par le NIST. On pourra toutefois déroger à ce principe lorsque les ressources du noeud IoT sont faibles et que l'on peut accepter un niveau de sécurité inférieur. Dans ce dernier cas, on pourra choisir $a_{min}$ = 160 si l'on accepte un niveau de sécurité minimal de 80 bits.

On notera que si la condition (7-2) est remplie sur 64 bits, elle est *a fortiori* sur 32 bits. Si, pour une valeur de *a* donnée, un tel trinôme n'existe pas, autrement dit s'il n'existe pas d'entier *b* vérifiant *a-b*=0[*wordsize*] tel que $H(X)$ soit un polynôme irréductible de $F_{2m}$, on recherche alors les polynômes de forme pentanomiale :

$$H(X) = X^a + X^b + X^c + X^d + 1 \tag{8-1}$$

tels que :

$$a - b = 0\left[wordsize\right], a - c = 0\left[wordsize\right] \text{ et } a - d = 0\left[wordsize\right] \tag{8-2}$$

On peut montrer que pour tout degré d'extension binaire *m*, on peut trouver un polynôme de forme trinomiale ou pentanomiale de degré *a=m*, irréductible sur $F_2$ et primitif sur $F_{2m}$, c'est-à-dire tel que l'anneau quotient $F_2[X]/(H(X))$ soit isomorphe à l'extension binaire $F_{2m}$ où $F_2[X]$ est l'anneau des polynômes à coefficients dans $F_2$. $H(X)$ étant irréductible sur $F_2$, $F_2[X]/(H(X))$ a une structure de corps comme $F_{2m}$. On notera *t* la classe de *X* dans $F_2[X]/(H(X))$, *t est* donc une racine de $H(X)$. $F_{2m}$ étant identique à un isomorphisme près à $F_{2m}[t]=F_2[X]/(H(X))$, les deux notations seront considérées équivalentes et utilisées indifféremment dans la suite.

Au terme de cette première étape, on obtient ainsi une liste de corps candidats $F_{2m}$ avec *m* premier, chaque corps candidat $F_{2m}$ étant associé à un polynôme irréductible $H(X)$ de degré *m* à coefficients dans $F_2$, de forme trinomiale ou pentanomiale, vérifiant respectivement la condition (7-2) ou (8-2).

Ainsi pour l'intervalle [160,571], on peut notamment retenir les corps candidats suivants :

$$F_{2^{223}}\left[t\right] = F_2\left[X\right]\Big/\left(X^{223} + X^{159} + 1\right) \tag{9-1}$$

$$F_{2^{257}}\left[t\right] = F_2\left[X\right]\Big/\left(X^{257} + X^{65} + 1\right) \tag{9-2}$$

$$F_{2^{313}}\left[t\right] = F_2\left[X\right]\Big/\left(X^{313} + X^{121} + 1\right) \tag{9-3}$$

$$F_{2^{431}}\left[t\right] = F_2\left[X\right]\Big/\left(X^{431} + X^{303} + X^{239} + X^{111} + 1\right) \tag{9-4}$$

$$F_{2^{479}}\left[t\right] = F_2\left[X\right]\Big/\left(X^{479} + X^{255} + 1\right) \tag{9-5}$$

$$F_{2^{487}}\left[t\right] = F_2\left[X\right]\Big/\left(X^{487} + X^{295} + X^{167} + X^{39} + 1\right) \tag{9-6}$$

$$F_{2^{521}}\left[t\right] = F_2\left[X\right]\Big/\left(X^{521} + X^{489} + 1\right) \tag{9-7}$$

$$F_{2^{569}}[t] = F_2[X] / \left( X^{569} + X^{441} + X^{313} + X^{121} + 1 \right) \qquad (9\text{-}8)$$

Tous les corps ci-dessus se prêtent bien à des calculs arithmétiques (notamment des réductions) au moyen d'une architecture 64 ou 32 bits, à l'exception des corps $F_{2479}[t]$ et $F_{2521}[t]$ qui ne se prêtent bien qu'à des calculs sur une architecture 32 bits.

Dans une seconde étape, on recherche pour chacun des corps $F_{2m}[t]$ ci-dessus, une courbe BEC simplifiée (cf. expression (6)), autrement dit un élément $d$ de $F_{2m}$, tel que l'ordre du groupe $E_d(F_{2m})$, noté $|E_d(F_{2m})|$, soit de la forme $2^s n$ où $n$ est un nombre premier et $s \in \{1,2,3\}$, et tel que $\left| E_d^{tw}\left(F_{2^m}\right) \right|$, l'ordre du groupe associé à la courbe BEC quadratiquement tordue, $E_d^{tw}$, soit également de la forme $2^{s'}n'$ où $n'$ est un nombre premier et $s' \in \{1,2,3\}$. Cette contrainte sur $|E_d(F_{2m})|$ (resp. sur $\left| E_d^{tw}\left(F_{2^m}\right) \right|$), autrement dit sur le nombre de points de la courbe $E_d$ (resp. $E_d^{tw}$), dont on rappelle que les coordonnées sont des éléments du corps $F_{2=m}$, permet de réduire la sensibilité aux attaques usuelles de résolution de ECDLP sur la courbe BEC (resp. des attaques par fautes s'effectuant sur la tordue quadratique).

En pratique, on recherche un élément $d$ avec un poids de Hamming faible en commençant par une expression binomiale en $t$ (poids de Hamming égal à 2), puis une expression trinomiale (poids de Hamming égal à 3), quadrinomiale (poids de Hamming égal à 4) et enfin pentanomiale (poids de Hamming égal à 5), autrement dit dans ce dernier cas :

$$d = t^{\alpha} + t^{\beta} + t^{\delta} + t^{\gamma} + 1 \qquad (10)$$

où $m > \alpha > \beta > \delta > \gamma > 0$ sont des entiers, $d$ étant tel que $|E_d(F)| = 2^s n$ et $\left| E_d^{tw}\left(F_{2^m}\right) \right| = 2^{s'}n'$ avec les conventions précitées.

D'autres critères de sécurité, d'importance moindre par rapport au critère mentionné plus haut, peuvent également être pris en compte, tels que :

- le $j$-invariant de la courbe BEC, à savoir $1/d^8$ doit être un élément générateur de $F_{2m}[t]$ ;
- le discriminant de la multiplication complexe de la courbe BEC, à savoir $\Delta_{Ed} = Tr(E_d)^2 - 4p^m$, doit être divisible par un grand nombre premier (par exemple supérieur à $2^{100}$) exactement une fois ;

- l'ordre multiplicatif de $2^m$, modulo $n$, dans $F_{2m}[t]$ est élevé (par exemple supérieur à $\dfrac{m-1}{100}$). De même, l'ordre multiplicatif de $2^m$, modulo $n'$, dans $F_{2m}[t]$ est élevé (par exemple supérieur à $\dfrac{m-1}{100}$).

Ces critères de sécurité permettent d'éviter dans certains cas une accélération des attaques ECDLP.

Il convient de noter que relativement peu de valeurs de $d$ vérifient l'ensemble de ces conditions.

L'Annexe donne pour chacun des corps candidats, les plus faibles valeurs du paramètre $d$ ainsi que l'ordre des groupes $E_d(F_{2m})$ et $E_d^{tw}\left(F_{2^m}\right)$. Pour simplifier les notations, on a adopté dans l'annexe les notations $|E|$ et $|E^{tw}|$ en lieu et place de $|E_d(F_{2m})|$ et $\left| E_d^{tw}\left(F_{2^m}\right) \right|$, respectivement.

Dans une troisième étape, on recherche pour chacune des courbes BEC sélectionnées à la deuxième étape, un point générateur $G$ optimal pour effectuer les opérations arithmétiques sur la courbe BEC et plus exactement dans le groupe additif $E_d(F_{2m})$.

Etant donné que l'ordre de $G$ (autrement dit l'ordre du sous-groupe cyclique engendré par $G$) divise l'ordre $|E_d(F_{2m})| = 2^s n$, on choisira avantageusement un point $G$ d'ordre $n$, le cofacteur de $G$ étant alors $2^s$. Le fait de choisir un point générateur d'ordre premier (élevé) renforce sensiblement la sécurité des calculs vis-à-vis d'éventuelles attaques.

Un avantage important de l'invention est que le point générateur est en outre choisi pour simplifier les calculs sur la courbe BEC.

On rappelle que les opérations arithmétiques (addition et doublement notamment) sur les points de la courbe font généralement appel à une technique d'addition différentielle (cf. article précité « Binary Edwards Curves » de Bernstein *et al.*). Selon cette technique, chaque point de la courbe $P(x, y)$ est représenté par une coordonnée $w(P) = x + y$ qui est un élément de $F_{2m}[t]$. Il est alors possible de calculer $w(2P)$ et $w(Q+P)$ (où $Q$ est un autre point de la courbe BEC) à partir de $w(P), w(Q)$ et $w(Q-P)$. Plus précisément, si l'on suppose que $w(P) = \dfrac{W_2}{Z_2}$, $w(Q) = \dfrac{W_3}{Z_3}$, $w(Q-P)=w_1$ en adoptant une représentation mixte (affine et projective), on a :

$$w(2P) = \frac{C^2}{d\left(Z_2^2\right)^2 + C^2} \tag{11-1}$$

$$w(P+Q) = \frac{V + Z_5 w_1}{V + d\left(Z_2 Z_3\right)^2} \tag{11-2}$$

avec $C = W_2(Z_2 + W_2)$ et $V = CW_3(Z_3 + W_3)$.

Ce calcul peut être encore simplifié (économie d'une opération d'élévation au carré au dénominateur de (11-1) et (11-2)) en adoptant un dénominateur commun pour $w(P)$ et $w(Q)$, comme décrit dans la thèse de B. Koziel précitée (paragraphe 3.2.5.1). Cette simplification est connue dans la littérature sous le nom de « Co-Z trick ».

Dans ce cas, $w(P)$ et $w(Q)$ sont représentés sous la forme $w(P) = \dfrac{W_2}{Z}$ et $w(Q) = \dfrac{W_3}{Z}$, et les expressions (11-1), (11-2) deviennent:

$$w(2P) = \frac{\left(W_2\left(W_2 + Z\right)\right)^2}{dZ^4 + \left(W_2\left(W_2 + Z\right)\right)^2} \tag{12-1}$$

$$w(P+Q) = \frac{\left(W_2 + W_3\right)^2 + \dfrac{1}{w_1}\left(W_2 + W_3\right)^2}{Z^2 + \dfrac{1}{w_1}\left(W_2 + W_3\right)^2} \tag{12-2}$$

Il est ensuite possible de revenir aux coordonnées $(x, y)$ à partir des coordonnées différentielles $w$, comme décrit par exemple dans la thèse de B. Koziel précitée (algorithme 3.3).

On remarque que l'expression (12-2) fait appel à $\dfrac{1}{w_1}$ avec $w_1 = w(Q-P)$. Or, lorsque l'on souhaite calculer $w(P+Q)$ par itérations successives sur une échelle de Montgomery, l'écart entre deux points au sein d'une itération est de $Q-P=G$. Il en résulte que toutes les itérations utilisent l'élément $\dfrac{1}{w(G)}$ de $F_{2m}[t]$.

Afin de réduire le nombre de multiplications dans $F_{2m}[t]$, il est intéressant d'opter pour un point générateur tel que $\dfrac{1}{w(G)}$ ait un faible poids de Hamming. Autrement dit, idéalement $\dfrac{1}{w(G)}$ doit être un monôme ou un binôme en $t$ :

$$\frac{1}{w(G)} = t^{\lambda} \tag{13-1}$$

ou

$$\frac{1}{w(G)} = t^\lambda + 1 \qquad\qquad (13\text{-}2)$$

avec $1 < \lambda < m$.

En outre, afin de simplifier l'implémentation matérielle du calcul, on choisira de préférence pour $\lambda$ un multiple de la taille du mot *wordsize* (32 ou 64).

Pour chacun des corps candidats retenus à l'issue de la première étape, on sélectionne parmi les valeurs de $d$ possibles fournies à la seconde étape, celles qui permettent d'obtenir un point générateur $G$ de coordonnées affines $G_x, G_y$ vérifiant (13-1) ou (13-2).

On peut montrer que les triplets $F_{2^m}[t]$, $d$ et $\dfrac{1}{w(G)}$ retenus sont en définitive :

$$F_{2^{223}}[t] : \quad d = t^{64} + t^{36} + t^5 + 1 \quad \text{et} \quad \frac{1}{w(G)} = t^{32} + 1 \qquad (14\text{-}1)$$

$$F_{2^{257}}[t] : \quad d = t^{65} + t^{31} + t^{14} + 1 \quad \text{et} \quad \frac{1}{w(G)} = t^{192} \qquad (14\text{-}2)$$

$$F_{2^{313}}[t] : \quad d = t^{38} + t^{33} + t^{28} + 1 \quad \text{et} \quad \frac{1}{w(G)} = t^{64} + 1 \qquad (14\text{-}3)$$

$$F_{2^{431}}[t] : \quad d = t^{83} + t^{66} + t^{17} + 1 \quad \text{et} \quad \frac{1}{w(G)} = t^{64} + 1 \qquad (14\text{-}4)$$

$$F_{2^{479}}[t] : \quad d = t^{73} + t^{29} + t^3 + 1 \quad \text{et} \quad \frac{1}{w(G)} = t^{64} + 1 \qquad (14\text{-}5)$$

$$F_{2^{487}}[t] : \quad d = t^{69} + t^{33} + t^{15} + 1 \quad \text{et} \quad \frac{1}{w(G)} = t^{64} + 1 \qquad (14\text{-}6)$$

$$F_{2^{521}}[t] : \quad d = t^{66} + t^{29} + t^{28} + 1 \quad \text{et} \quad \frac{1}{w(G)} = t^{32} + 1 \qquad (14\text{-}7)$$

$$F_{2^{569}}[t] : \quad d = t^{56} + t^{45} + t^{41} + 1 \quad \text{et} \quad \frac{1}{w(G)} = t^{64} + 1 \qquad (14\text{-}8)$$

En raison de la forme de $\dfrac{1}{w(G)}$ , on comprend que les triplets donnés ci-dessus sont compatibles avec une implémentation sur une architecture matérielle à 32 ou 64 bits à l'exception toutefois de $F_{2223}[t]$ et $F_{2521}[t]$ (cf. également remarque *supra* sous (9-7) pour $F_{2479}[t]$), compatibles avec une implémentation sur une architecture matérielle de 32 bits seulement.

Pour chacune des courbes définies sur les corps ci-dessus, les points générateurs $G$ sont donnés respectivement par leurs coordonnées affines (en notation hexadécimale) :

- pour $F_{2223}[t]$ et $d = t^{64} + t^{36} + t^5 + 1$ :

$$G_x = 205\text{bfedd } 71\text{b0b0fd feb3345a f71cc721 } 790\text{e83c4 b88094e9 a63f6d43}$$
$$G_y = 205\text{bfedd f1b0b0fd 7eb3345a f71cc721 } 790\text{e83c4 b88094e9 a63f6d43}$$

- pour $F_{2257}[t]$ et $d = t^{65} + t^{31} + t^{14} + 1$ :

$$G_x = \qquad 1 \text{ 6b46e24a a4b12ab2 289fcd34 17615387 } 810\text{f083f 43419d8c}$$
$$\text{ae38ad9a c640d960}$$
$$G_y = \qquad 1 \text{ 6b46e24a a4b12aba 289fcd34 17615383 } 810\text{f083f 43419d8e}$$
$$\text{ae38ad9a c640d968}$$

- pour $F_{2313}[t]$ et $d = t^{38} + t^{33} + t^{28} + 1$ :

$$G_x = \quad 15\text{c67e3 024c7c27 466e72a3 391256e9 a729fc15 8092053d 89087c0f}$$
$$38408\text{b21 4b0ade57 363ea938}$$
$$G_y = \quad 15\text{c67e3 024c7c27 446e72a3 391256e9 a529fc15 8092053d 8b087c0f}$$
$$38408\text{b21 4b0ade57 363ea938}$$

- pour $F_{2431}[t]$ et $d = t^{83} + t^{66} + t^{17} + 1$ :

$$G_x = \qquad 4\text{e17 } 65\text{c1f2f6 140db17d 5ef2f14c 59a38a93 e5b65ba9 acca547b}$$
$$\text{f2cc34f3 d55bd85c cf4daeaf 7ca1beca a8ee877b 01f8d8ac ae12b210}$$
$$G_y = \qquad 4\text{e17 } 65\text{c1f2f6 140d317d 5ef2f14c 59a30a93 e5b65ba9 acca547b}$$
$$\text{f2cc34f3 d55b585c cf4daeaf 7ca13eca a8ee877b 01f8d8ac ae12b210}$$

- pour $F_{2479}[t]$ et $d = t^{73} + t^{29} + t^3 + 1$ :

$$G_x = 7\text{bdd9f19 e11e888e 80d7c093 092d208b 4fe996e8 fcbdffa2 8cc90173}$$
$$\text{ece2c436 73f1372e 975ba9dc d3a06332 abf15dbe 9b679f6c 63e30b88}$$
$$4\text{ab93272}$$
$$G_y = 3\text{bdd9f19 a11e888e 40d7c093 492d208b 8fe996e8 bcbdffa2 4cc90173}$$
$$\text{ece2c436 f3f1372e 175ba9dc 53a06332 2bf15dbe 1b679f6c e3e30b88}$$
$$\text{cab93272}$$

- pour $F_{2487}[t]$ et $d = t^{69} + t^{33} + t^{15} + 1$ :

$$G_x = \qquad 33 \text{ 9b843c53 c409543f 396d39e5 7efde813 f06e3099 735004b9}$$
$$99\text{b15776 a75a4c3a 22dcaf1e 91e261fe 479b89a6 4d651039 28195d72}$$
$$7\text{bd3d157 735b2071}$$
$$G_y = \qquad 33 \text{ 9b843c53 c40954bf 396d39e5 7efde893 f06e3099 73500439}$$
$$99\text{b15776 a75a4c3a 22dcaf1e 91e261fe 479b89a6 4d6510b9 28195d72}$$
$$7\text{bd3d1d7 735b2071}$$

- pour $F_{2521}[t]$ et $d = t^{66} + t^{29} + t^{28} + 1$ :

$$G_x = \quad 16b \; 369b497b \; 805e6199 \; a342909a \; a4608cdc \; ecb10e09 \; 88ba73eb$$
$$1f118603 \; 9c8b1f6d \; 2a9db39b \; 1302d29d \; 9d449b9a \; a459cc5d \; 6bbb4e33$$
$$a1eb8fcc \; 056ce724 \; cde5aaa8$$

$$G_y = \quad 16b \; 369b4b7b \; 805e6199 \; a342909a \; a4608cdc \; ecb10e09 \; 88ba73eb$$
$$1f118603 \; 9c8b1f6d \; 2a9db39b \; 1302d29d \; 9d449b9a \; a459cc5d \; 6bbb4e33$$
$$a1eb8fcc \; 056ce724 \; cde5aaa8$$

- pour $F_{2569}[t]$ et $d = t^{56} + t^{45} + t^{41} + 1$ :

$$G_x = \quad 195b22b \; 2864ee08 \; dd456bab \; 1a95cdd8 \; c7e3fd33 \; 0fddf630 \; f9c3bb5c$$
$$33f062b3 \; 41c919c6 \; bb4cbf1d \; 4335a344 \; ed023b31 \; 9585ea0e \; 16f03453$$
$$cc5ba9a8 \; 6a4b28b1 \; 6e1c72ad \; 75f1141f$$

$$G_y = \quad 195b22b \; 2864ee08 \; df456bab \; 1a95cdd8 \; c5e3fd33 \; 0fddf630 \; f9c3bb5c$$
$$33f062b3 \; 41c919c6 \; bb4cbf1d \; 4135a344 \; ed023b31 \; 9785ea0e \; 16f03453$$
$$ce5ba9a8 \; 6a4b28b1 \; 6e1c72ad \; 75f1141f$$

La Figure unique récapitule de manière schématique les étapes de sélection des paramètres d'une méthode cryptographique sur une courbe binaire d'Edwards selon un mode de réalisation de l'invention.

A l'étape 110, on recherche les corps d'extension binaire $F_{2m}$, où $m$ appartient à un intervalle de nombres premiers prédéterminé et les polynômes primitifs associés (c'est-à-dire les polynômes irréductibles de degré $m$ sur $F_2[X]$ ), tels que les calculs arithmétiques sur ces corps se prêtent bien à une implémentation sur une architecture matérielle utilisant des mots de taille *wordsize* prédéterminée (32 ou 64 bits).

On obtient une liste de corps d'extension binaire $F_{2m}$ ainsi que pour chacun de ces corps un polynôme primitif $H(X)$ de ce corps.

A l'étape 120, pour chacun des corps fournis par l'étape 110, on recherche les courbes BEC, définies par leurs paramètres $d \in F_{2m}[t]$ (de plus faibles valeurs possibles) satisfaisant à une pluralité de critères de sécurité et, en premier lieu, $|E_d(F_{2m})|=2^s n$ et $\left| E_d^{tw}\left( F_{2^m} \right) \right| = 2^{s'} n'$ avec $s,s' \in \{1,2,3\}$. La liste des paramètres $d$ pour chacun des corps est donnée dans l'Annexe.

A l'étape 130, pour chacun des corps fournis à l'étape 110, on sélectionne parmi les valeurs de $d$ fournies à la seconde étape, celles qui permettent d'obtenir un point générateur $G$ optimal pour effectuer les opérations arithmétiques sur $E_d(F_{2m})$. Un tel point optimal, s'il existe, est d'ordre $s$ dans $E_d(F_{2m})$ et dont l'inverse de la coordonnée différentielle $\dfrac{1}{w(G)}$ dans $F_{2m}[t]$ est un faible poids de Hamming (1 ou 2). Cette étape fournit une sélection de valeurs du paramètre $d$ et de points générateurs $G$ pour chacun des corps fournis à l'étape 110.

Une méthode cryptographique sur courbe BEC, dont les paramètres de domaine sont issus de cette sélection, s'avère particulièrement efficace en termes de nombre de calculs, simple à implémenter sur une architecture matérielle à 32 ou 64 bits et résistante aux attaques connues.

A titre d'exemple, une méthode de chiffrement/ déchiffrement sur courbe BEC utilisant les paramètres de domaine issus de cette sélection est décrite ci-après.

On suppose que Bob souhaite envoyer un message $M$ à Alice où $M \in E_d(F_{2m})$. Bob possède une clé secrète $k$ (valeur entière) et une clé publique correspondante $A = kG$, où $G$ est le point générateur figurant dans les paramètre de domaine. De même, Alice possède une clé secrète $y$ et une clé publique correspondante $Y = yG$.

Bob calcule alors $H = kY$ et $M_{enc} = M + H$ puis transmet $(H, M_{enc})$ à Alice. Alice effectue alors l'opération $H' = yA$ et retrouve ainsi le message en clair $M$ au moyen de $M_{enc} - H' = M + kyG - ykG = M$.

**Annexe**

$F_{2223}$ :

$$d = t^{155} + t^{111} + 1$$

$$|E| = 1347997333357531989733350754350981749158693850776165028497683523796$$
$$|E^{tw}| = 1347997333357531989733350754350981092447845057176440745260592\\6725422$$

$$d = t^{44} + t^{35} + t^{26} + 1$$

$$|E| = 1347997333357531989733350754350981653027868960696123837432195\\5643092$$
$$|E^{tw}| = 1347997333357531989733350754350981414335845481557933410678165\\4606126$$

$$d = t^{53} + t^{23} + t^{7} + 1$$

$$|E| = 1347997333357531989733350754350981012156787046715773259092397\\7333204$$
$$|E^{tw}| = 1347997333357531989733350754350982055206927395538283989017963\\2916014$$

$$d = t^{54} + t^{42} + t^{5} + 1$$

$$|E| = 1347997333357531989733350754350981879686013129322391496219288\\0564052$$
$$|E^{tw}| = 1347997333357531989733350754350981187677013129316657518910729\\685166$$

$$d = t^{55} + t^{46} + t^{26} + 1$$

$$|E| = 1347997333357531989733350754350981793887598864489545475623750\\8818004$$
$$|E^{tw}| = 1347997333357531989733350754350981273476115577764511772486610\\1431214$$

$$d = t^{57} + t^{44} + t^{2} + 1$$

$$|E| = 1347997333357531989733350754350980936055212516676923172040374\\8790356$$
$$|E^{tw}| = 1347997333357531989733350754350982131308501925577134076069986\\1458862$$

$$d = t^{58} + t^{48} + t^{13} + 1$$

$$|E| = 1347997333357531989733350754350981500963337399910176999880257\\4262804$$
$$|E^{tw}| = 1347997333357531989733350754350981566400377042343880248230103\\5986414$$

$$d = t^{64} + t^{36} + t^5 + 1$$

$$|E| = 1347997333357531989733350754350981789887736366286318406262324\\2975476$$
$$|E^{tw}| = 1347997333357531989733350754350981277475978075967738841848036\\7273742$$

$$d = t^{64} + t^{55} + t^{46} + 1$$

$$|E| = 1347997333357531989733350754350982022723945420554483790586265\\2108244$$
$$|E^{tw}| = 1347997333357531989733350754350981044639769021699573457524095\\8140974$$

$$d = t^{65} + t^{37} + t^{35} + 1$$

$$|E| = 1347997333357531989733350754350981479450291587349555853466954\\2443444$$
$$|E^{tw}| = 1347997333357531989733350754350981587913422854904501394643406\\7805774$$

$$d = t^{65} + t^{61} + t^{52} + 1$$

$$|E| = 1347997333357531989733350754350981784482333780996085990330229\\6925236$$
$$|E^{tw}| = 1347997333357531989733350754350981282881380661257971257780131\\3323982$$

$$d = t^{66} + t^{44} + t^{19} + 1$$

$$|E| = 1347997333357531989733350754350981794306700543404979932766278\\7905684$$
$$|E^{tw}| = 1347997333357531989733350754350981273057013898849077315344082\\2343534$$

$F_{2257}$ :

$$d = t^{41} + t^{29} + t^{10} + 1$$

$$|E| = 23158417847463239084714197001737581570677373701740163526288948390215108850114 8$$

$$|E^{tw}| = 2315841784746323908471419700173758157063062016451606208949408521295014300585 98$$

$$d = t^{56} + t^{46} + t^{45} + 1$$

$$|E| = 2315841784746323908471419700173758157062852610420168714334878692043975974794 52$$

$$|E^{tw}| = 2315841784746323908471419700173758157067946776205453847243424668272549210802 94$$

$$d = t^{65} + t^{31} + t^{14} + 1$$

$$|E| = 2315841784746323908471419700173758157063326169673627090211406329232917976189 08$$

$$|E^{tw}| = 2315841784746323908471419700173758157067473216951995471366897031083607209408 38$$

$$d = t^{66} + t^{47} + t^{29} + 1$$

$$|E| = 2315841784746323908471419700173758157058887860786976714461069556597032254645 72$$

$$|E^{tw}| = 2315841784746323908471419700173758157071911525838645847117233803719492930951 74$$

$F_{2313}$:

$$d = t^{38} + t^{33} + t^{28} + 1$$

$$|E| = 1668739871813211001871110707944962589533362908081614562265454921798860001889540 6224309766337212$$

$$|E^{tw}| = 1668739871813211001871110707944962589533362908100655390776797590423358319642710 2369799016271174$$

$$d = t^{53} + t^{49} + t^{17} + 1$$

$$|E| = 1668739871813211001871110707944962589533362908092673376655730073920783103989345 3396724372848188$$

$$|E^{tw}| = 1668739871813211001871110707944962589533362908089596576386522438301435217542905 5197384409760198$$

$$d = t^{60} + t^{33} + t^{20} + 1$$

$$|E| = 16687398718132110018711107079449625895333629080900313812608740244960375879503029302035966579548$$

$$|E^{tw}| = 16687398718132110018711107079449625895333629080922385717813784877261807335819479292072816028838$$

$$d = t^{76} + t^{66} + t^{56} + 1$$

$$|E| = 16687398718132110018711107079449625895333629080816145622654549217988600018895406224309766337212$$

$$|E^{tw}| = 16687398718132110018711107079449625895333629081006553907767975904233583196427102369799016271174$$

$$d = t^{87} + t^{58} + t^{42} + 1$$

$$|E| = 16687398718132110018711107079449625895333629080865942300872776772893590648032762872892280740188$$

$$|E^{tw}| = 16687398718132110018711107079449625895333629080956757229549748349328592567289745721216501868198$$

$$d = t^{151} + t^{117} + t^{34} + 1$$

$$|E| = 16687398718132110018711107079449625895333629080969814126455869588728095748361507414136743630268$$

$$|E^{tw}| = 16687398718132110018711107079449625895333629080852885403966655533494087466961001179972038978118$$

$$d = t^{196} + t^{137} + t^{59} + 1$$

$$|E| = 16687398718132110018711107079449625895333629080935329736127723617359396090308494161207364593244$$

$$|E^{tw}| = 16687398718132110018711107079449625895333629080887369794294801504862787125014014432901418015142$$

$$d = t^{268} + t^{199} + t^{69} + 1$$

$$|E| = 16687398718132110018711107079449625895333629080726993158433819312350843110793321750722399763004$$

$$|E^{tw}| = 16687398718132110018711107079449625895333629081095706371988705809871340104529186843386382845382$$

$$d = t^{302} + t^{234} + t^{68} + 1$$

$$|E| = 1668739871813211001871110707944962589533362908096981412645586$$
$$9588728095748361507414136743630268$$
$$|E^{tw}| = 1668739871813211001871110707944962589533362908085288540396665$$
$$5533494087466961001179972038978118$$

$$d = t^{35} + t^{24} + t^{23} + t^{12} + 1$$

$$|E| = 1668739871813211001871110707944962589533362908070638615711831$$
$$4337623713626113549760757974821692$$
$$|E^{tw}| = 1668739871813211001871110707944962589533362908111631337330421$$
$$0784598469589208958833350807786694$$

$$d = t^{35} + t^{24} + t^{23} + t^{12} + 1$$

$$|E| = 1668739871813211001871110707944962589533362908070638615711831$$
$$4337623713626113549760757974821692$$
$$|E^{tw}| = 1668739871813211001871110707944962589533362908111631337330421$$
$$0784598469589208958833350807786694$$

$$d = t^{37} + t^{27} + t^{24} + t^{17} + 1$$

$$|E| = 1668739871813211001871110707944962589533362908086890321737498$$
$$569000282514234594943144587086908$$
$$|E^{tw}| = 1668739871813211001871110707944962589533362908095379631304753$$
$$9432219358072976559150964195521478$$

$$d = t^{264} + t^{229} + t^{227} + t^{143} + 1$$

$$|E| = 1668739871813211001871110707944962589533362908079531785703240$$
$$8491816720622524016103424180036604$$
$$|E^{tw}| = 1668739871813211001871110707944962589533362908102738167339011$$
$$6630405462592798492490684602571782$$

$$d = t^{274} + t^{200} + t^{118} + t^{79} + 1$$

$$|E| = 1668739871813211001871110707944962589533362908093532973612772$$
$$3617359396090308494161207364593244$$
$$|E^{tw}| = 1668739871813211001871110707944962589533362908088736979429480$$
$$1504862787125014014432901418015142$$

$F_{2431}$ :

$$d = t^{81} + t^{66} + t + 1$$

$|E| = 5545339388241629719156828368286167406872874150751633150340959$
$16124757776831350284013096557949109460276731018714522417667 69$
$38291412$

$|E^{tw}| = 5545339388241629719156828368286167406872874150751633150340959$
$16121090746290899965202893204492546370962225465670039011063 89$
$58339886$

$$d = t^{83} + t^{66} + t^{17} + 1$$

$|E| = 5545339388241629719156828368286167406872874150751633150340959$
$16131188222853620417205051641025857549800325003969881916422 24$
$88620692$

$|E^{tw}| = 5545339388241629719156828368286167406872874150751633150340959$
$16114660300268629832010938121415798281438631480414679512309 34$
$08010606$

$$d = t^{109} + t^{6} + t^{4} + 1$$

$|E| = 5545339388241629719156828368286167406872874150751633150340959$
$16130337092806146971602038044953833877341935666153526772444 8$
$35375476$

$|E^{tw}| = 5545339388241629719156828368286167406872874150751633150340959$
$16115511430316103277613951717487821953504762917769208751487 10$
$61255822$

$$d = t^{112} + t^{48} + t^{21} + 1$$

$|E| = 5545339388241629719156828368286167406872874150751633150340959$
$16110451164310799855379520610103512388056476818478075591818 46$
$87178772$

$|E^{tw}| = 5545339388241629719156828368286167406872874150751633150340959$
$16135397358811450393836469152338143443182479665906485836913 12$
$09452526$

$$d = t^{42} + t^{24} + t^{3} + t + 1$$

$|E| = 5545339388241629719156828368286167406872874150751633150340959$
$16116688841041277751286888333041679135935846746255841947897 52$
$89296532$

$|E^{tw}| = 5545339388241629719156828368286167406872874150751633150340959$
$16129159682080972479291014293999766953031097381287194808340 6$
$07334766$

$$d = t^{42} + t^{41} + t^{28} + t^{6} + 1$$

$$|E| = 5545339388241629719156828368286167406872874150751633150340959$$
$$1610879660667015181231284161886191921497681925946916445067501$$
$$85191764$$
$$|E^{tw}| = 5545339388241629719156828368286167406872874150751633150340959$$
$$1613705191645209843690314814357973661626213722491539697805657$$
$$11439534$$

$$d = t^{43} + t^{32} + t^{10} + t^7 + 1$$

$$|E| = 5545339388241629719156828368286167406872874150751633150340959$$
$$1612780378195877079017899633442885671146805522726976585933532$$
$$53859156$$
$$|E^{tw}| = 5545339388241629719156828368286167406872874150751633150340959$$
$$1611804474116347945903699342801279911977090125711479556939626$$
$$42772142$$

$$d = t^{45} + t^{37} + t^{22} + t^4 + 1$$

$$|E| = 5545339388241629719156828368286167406872874150751633150340959$$
$$1611499187818952875263366239690597107718098966647148604830783$$
$$58534612$$
$$|E^{tw}| = 5545339388241629719156828368286167406872874150751633150340959$$
$$1613085664493272149658232736553568475405796681791307538042375$$
$$38096686$$

$$d = t^{46} + t^{28} + t^{24} + t^3 + 1$$

$$|E| = 5545339388241629719156828368286167406872874150751633150340959$$
$$1612558161865233753102226433997061596747414104229210780617439$$
$$63726932$$
$$|E^{tw}| = 5545339388241629719156828368286167406872874150751633150340959$$
$$1612026690446991271819372542247103986376481544209245362255719$$
$$32904366$$

$F_{2479}$ :

$$d = t^{73} + t^{29} + t^3 + 1$$

$$|E| = 15608742751579961156907986148965831528742990713324855754295784798126858694154480197179544588188676304693469803241139597788$$
$$9616430979594599455835$$
$$|E^{tw}| = 15608742751579961156907986148965831528742990713324855754295784798126858694043176004023516442446243406904799507972926631165$$
$$5181136949233931173182$$

$$d = t^{94} + t^{43} + t^{41} + 1$$

$$|E| = 1560874275157996115690798614896583152874299071332485575429578$$
$$4798126858708108608628131342254255210848441550945351931912625764905711113509109781 2$$
$$|E^{tw}| = 1560874275157996115690798614896583152874299071332485575429578$$
$$47981268586800890475307171877610939862675411421667887303769190326622177150215192366$$

$F_{2487}:$

$$d = t^{55} + t^{30} + t^3 + 1$$

$$|E| = 3995838144404470056168444454135252871358205622611163073099720$$
$$9083204758255555609186956322665762982603062921233701089815270324745660730205268647485 32$$
$$|E^{tw}| = 3995838144404470056168444454135252871358205622611163073099720$$
$$908320475825822990800551660958079556843106235709969711139342022072078247805115455365 26$$

$$d = t^{65} + t^{13} + t^7 + 1$$

$$|E| = 3995838144404470056168444454135252871358205622611163073099720$$
$$908320475825604372768859902150319738657784654051776658715871750644759617674381448634 76$$
$$|E^{tw}| = 3995838144404470056168444454135252871358205622611163073099720$$
$$908320475825774227218648081473522800788384502891894142238740596172979360336002654215 82$$

$$d = t^{69} + t^{33} + t^{15} + 1$$

$$|E| = 3995838144404470056168444454135252871358205622611163073099720$$
$$908320475826018186213822669385452154446682534549867553370776615697197696454133259778 44$$
$$|E^{tw}| = 3995838144404470056168444454135252871358205622611163073099720$$
$$908320475825360413773685314238390384999486622393803247583835731120541281556250843072 14$$

$$d = t^{74} + t^{48} + t^{27} + 1$$

$$|E| = 3995838144404470056168444454135252871358205622611163073099720$$
$$908320475825673542565748480144773397599843065205937155296831821693605387804592192848 52$$
$$|E^{tw}| = 3995838144404470056168444454135252871358205622611163073099720$$
$$908320475825705057421759503479069141846326091737733645657780525124133590205791910002 06$$

$F_{2521}:$

$$d = t^{66} + t^{29} + t^{28} + 1$$

$$|E| = 68647976601306097149819007990813932172694353001433054093944634591855431833976570894395032898316224396265394341977861311221626406898579780051322403286027822204$$

$$|E^{tw}| = 68647976601306097149819007990813932172694353001433054093944634591855431833976550148056159914912866703280531885851755849520813353095753096200158162536273321102$$

$$d = t^{75} + t^{62} + t^6 + 1$$

$$|E| = 686479766013060971498190079908139321726943530014330540939446345918554318339765644325618371620330136782268291990348988973602935351114141960457442165751243312$$

$$|E^{tw}| = 68647976601306097149819007990813932172694353001433054093944634591855431833976556609889355651196077421319097028794718263382146224882918680205736349247176810094$$

$$d = t^{103} + t^{56} + t + 1$$

$$|E| = 686479766013060971498190079908139321726943530014330540939446345918554318339765280337121590579735455828405233832527068408438328505837298857563826672713504028$$

$$|E^{tw}| = 686479766013060971498190079908139321726943530014330540939446345918554318339765930087390337552555455167054028445769103198986069094106029904950978985509506278$$

$$d = t^{37} + t^{35} + t^{33} + t^4 + 1$$

$$|E| = 6864797660130609714981900799081393217269435300143305409394463459185543183397651716440791726512166027863015928476057827782516504892091120870368580538489310652$$

$$|E^{tw}| = 68647976601306097149819007990813932172694353001433054093944634591855431833976603878043275548107430820915766943069038882917274711073421667547794760437408036 54$$

$$d = t^{50} + t^{31} + t^{28} + t^{19} + 1$$

$$|E| = 6864797660130609714981900799081393217269435300143305409394463459185543183397656672194523544595106010737102924175651130087558827931790454284143680210018716988$$

$$|E^{tw}| = 68647976601306097149819007990813932172694353001433054093944634591855431833976554320505957367278030992174896986073105859866851480676428333410043763722113 97318$$

$F_{2569}$:

$$d = t^{56} + t^{45} + t^{41} + 1$$

$$|E| = 1932268761508629172347675945465993672149463664853217499328617$$
$$6257257595711447802122680324312135204225690994105833596555418$$
$$474932773179050848492246503400252208800671993093 08$$

$$|E^{tw}| = 1932268761508629172347675945465993672149463664853217499328617$$
$$6257257595711447802122681613353684021553933642054481425216355$$
$$1758538372508257089368402312705552781691 3615514118$$

## Revendications

1. Méthode cryptographique sur une courbe binaire d'Edwards définie par $d(x+x^2+y+y^2)=(x+x^2)(y+y^2)$ dans le plan affine par un corps d'extension binaire $F_{2^m}[t]=F_2[X]/(H(X))$ où $F_2[X]$ est l'anneau des polynômes à coefficients dans $F_2$ et $H(X)$ est un polynôme irréductible de $F_2[X]$ de degré $m$, le paramètre $d$ de la courbe étant un élément de $F_{2^m}[t]$, l'ensemble des points de la courbe étant muni d'une loi lui conférant une structure de groupe additif, $E_d(F_{2^m})$, ladite méthode faisant appel à au moins une primitive cryptographique dans laquelle un entier $k$ est transformé en $kG$ où $G$ est un point de $E_d(F_{2^m})$, de coordonnées affines $(G_x, G_y)$, dit point générateur, ladite méthode mettant en oeuvre des opérations arithmétiques au moyen d'une addition différentielle sur ladite courbe, ladite addition différentielle faisant appel à des itérations successives sur une échelle de Montgomery sur cette courbe, chaque itération utilisant l'élément $\dfrac{1}{w(G)}$ où $w(G)=G_x + G_y$ est la coordonnée différentielle du point générateur, ladite méthode étant **caractérisée en ce que**:

   - pour une implémentation de ladite méthode au moyen d'une architecture matérielle 32 bits ou 64 bits, le corps d'extension binaire est l'un des corps suivants :

   $$F_{2^{257}}[t] = F_2[X]/(X^{257} + X^{65} + 1) \;;$$

   $$F_{2^{431}}[t] = F_2[X]/(X^{431} + X^{303} + X^{239} + X^{111} + 1) \;;$$

   $$F_{2^{487}}[t] = F_2[X]/(X^{487} + X^{295} + X^{167} + X^{39} + 1) \;;$$

   $$F_{2^{569}}[t] = F_2[X]/(X^{569} + X^{441} + X^{313} + X^{121} + 1) \;;$$

   et
   - pour une implémentation au moyen d'une architecture matérielle 32 bits, le corps d'extension binaire pouvant être également choisi parmi :

   $$F_{2^{223}}[t] = F_2[X]/(X^{223} + X^{159} + 1) \;;$$

   $$F_{2^{479}}[t] = F_2[X]/(X^{479} + X^{255} + 1)$$

   $$F_{2^{521}}[t] = F_2[X]/(X^{521} + X^{489} + 1) \;;$$

   - le paramètre $d$ de la courbe binaire d'Edwards sur chacun de ces corps d'extension binaire étant donné par :
   - pour $F_{2223}[t]$ : $d = t^{64} + t^{36} + t^5 + 1$ ;
   - pour $F_{2257}[t]$ : $d = t^{65} + t^{31} + t^{14} + 1$ ;
   - pour $F_{2313}[t]$ : $d = t^{38} + t^{33} + t^{28} + 1$ ;

- pour $F_{2431}[t]$ : $d = t^{83} + t^{66} + t^{17} + 1$ ;
- pour $F_{2479}[t]$ : $d = t^{73} + t^{29} + t^{3} + 1$ ;
- pour $F_{2487}[t]$ : $d = t^{69} + t^{33} + t^{15} + 1$ ;
- pour $F_{2521}[t]$ : $d = t^{66} + t^{29} + t^{28} + 1$ ;
- pour $F_{2569}[t]$ : $d = t^{56} + t^{45} + t^{41} + 1$

et que l'inverse de la coordonnée différentielle du point générateur, $\dfrac{1}{w(G)}$ ,vérifie:

- pour $F_{2223}[t]$ : $\dfrac{1}{w(G)} = t^{32} + 1$ ;

- pour $F_{2257}[t]$ : $\dfrac{1}{w(G)} = t^{192}$ ;

- pour $F_{2313}[t]$ : $\dfrac{1}{w(G)} = t^{64} + 1$ ;

- pour $F_{2431}[t]$ : $\dfrac{1}{w(G)} = t^{64} + 1$ ;

- pour $F_{2479}[t]$ : $\dfrac{1}{w(G)} = t^{64} + 1$ ;

- pour $F_{2487}[t]$ : $\dfrac{1}{w(G)} = t^{64} + 1$ ;

- pour $F_{2521}[t]$ : $\dfrac{1}{w(G)} = t^{32} + 1$ ;

- pour $F_{2569}[t]$ : $\dfrac{1}{w(G)} = t^{64} + 1$ .

2. Méthode cryptographique sur une courbe binaire d'Edwards selon la revendication 1, **caractérisée** en ce les coordonnées affines $(G_x, G_y)$ du point générateur sont données, en notation hexadécimale, par :

- pour $F_{2223}[t]$ :

$$G_x = 205\text{bfedd } 71\text{b0b0fd } \text{feb3345a } \text{f71cc721 } 790\text{e83c4 } \text{b88094e9 } \text{a63f6d43}$$
$$G_y = 205\text{bfedd } \text{f1b0b0fd } 7\text{eb3345a } \text{f71cc721 } 790\text{e83c4 } \text{b88094e9 } \text{a63f6d43}$$

- pour $F_{2257}[t]$ :

$$G_x = 1\ 6\text{b46e24a } \text{a4b12ab2 } 289\text{fcd34 } 17615387\ 810\text{f083f } 43419\text{d8c } \text{ae38ad9a } \text{c640d960}$$
$$G_y = 1\ 6\text{b46e24a } \text{a4b12aba } 289\text{fcd34 } 17615383\ 810\text{f083f } 43419\text{d8e } \text{ae38ad9a } \text{c640d968}$$

- pour $F_{2313}[t]$ :

$$G_x = \quad 15c67e3 \ 024c7c27 \ 466e72a3 \ 391256e9 \ a729fc15 \ 8092053d \ 89087c0f$$
$$38408b21 \ 4b0ade57 \ 363ea938$$
$$G_y = \quad 15c67e3 \ 024c7c27 \ 446e72a3 \ 391256e9 \ a529fc15 \ 8092053d \ 8b087c0f$$
$$38408b21 \ 4b0ade57 \ 363ea938$$

- pour $F_{2431}[t]$ :

$$G_x = \quad 4e17 \ 65c1f2f6 \ 140db17d \ 5ef2f14c \ 59a38a93 \ e5b65ba9 \ acca547b$$
$$f2cc34f3 \ d55bd85c \ cf4daeaf \ 7ca1beca \ a8ee877b \ 01f8d8ac \ ae12b210$$
$$G_y = \quad 4e17 \ 65c1f2f6 \ 140d317d \ 5ef2f14c \ 59a30a93 \ e5b65ba9 \ acca547b$$
$$f2cc34f3 \ d55b585c \ cf4daeaf \ 7ca13eca \ a8ee877b \ 01f8d8ac \ ae12b210$$

- pour $F_{2479}[t]$ :

$$G_x = 7bdd9f19 \ e11e888e \ 80d7c093 \ 092d208b \ 4fe996e8 \ fcbdffa2 \ 8cc90173$$
$$ece2c436 \ 73f1372e \ 975ba9dc \ d3a06332 \ abf15dbe \ 9b679f6c \ 63e30b88$$
$$4ab93272$$
$$G_y = 3bdd9f19 \ a11e888e \ 40d7c093 \ 492d208b \ 8fe996e8 \ bcbdffa2 \ 4cc90173$$
$$ece2c436 \ f3f1372e \ 175ba9dc \ 53a06332 \ 2bf15dbe \ 1b679f6c \ e3e30b88$$
$$cab93272$$

- pour $F_{2487}[t]$ :

$$G_x = \quad 33 \ 9b843c53 \ c409543f \ 396d39e5 \ 7efde813 \ f06e3099 \ 735004b9$$
$$99b15776 \ a75a4c3a \ 22dcaf1e \ 91e261fe \ 479b89a6 \ 4d651039 \ 28195d72$$
$$7bd3d157 \ 735b2071$$
$$G_y = \quad 33 \ 9b843c53 \ c40954bf \ 396d39e5 \ 7efde893 \ f06e3099 \ 73500439$$
$$99b15776 \ a75a4c3a \ 22dcaf1e \ 91e261fe \ 479b89a6 \ 4d6510b9 \ 28195d72$$
$$7bd3d1d7 \ 735b2071$$

- pour $F_{2521}[t]$ :

$$G_x = \quad 16b \ 369b497b \ 805e6199 \ a342909a \ a4608cdc \ ecb10e09 \ 88ba73eb$$
$$1f118603 \ 9c8b1f6d \ 2a9db39b \ 1302d29d \ 9d449b9a \ a459cc5d \ 6bbb4e33$$
$$a1eb8fcc \ 056ce724 \ cde5aaa8$$
$$G_y = \quad 16b \ 369b4b7b \ 805e6199 \ a342909a \ a4608cdc \ ecb10e09 \ 88ba73eb$$
$$1f118603 \ 9c8b1f6d \ 2a9db39b \ 1302d29d \ 9d449b9a \ a459cc5d \ 6bbb4e33$$
$$a1eb8fcc \ 056ce724 \ cde5aaa8$$

- pour $F_{2569}[t]$ :

$$G_x = 195b22b \ 2864ee08 \ dd456bab \ 1a95cdd8 \ c7e3fd33 \ 0fddf630 \ f9c3bb5c$$
$$33f062b3 \ 41c919c6 \ bb4cbf1d \ 4335a344 \ ed023b31 \ 9585ea0e \ 16f03453$$
$$cc5ba9a8 \ 6a4b28b1 \ 6e1c72ad \ 75f1141f$$
$$G_y = 195b22b \ 2864ee08 \ df456bab \ 1a95cdd8 \ c5e3fd33 \ 0fddf630 \ f9c3bb5c$$
$$33f062b3 \ 41c919c6 \ bb4cbf1d \ 4135a344 \ ed023b31 \ 9785ea0e \ 16f03453$$
$$ce5ba9a8 \ 6a4b28b1 \ 6e1c72ad \ 75f1141f$$

**Patentansprüche**

1. Kryptographisches Verfahren auf einer binären Edwards Kurve, die durch $d(x+x^2+y+y^2)=(x+x^2)(y+y^2)$ in der Affinitätsebene durch einen binären Erweiterungskörper $\mathbb{F}_{2^m}[t] = \mathbb{F}_2[X]/(H(X))$ definiert ist, wobei $\mathbb{F}_2[X]$ der Ring der Polynome mit Koeffizienten in $\mathbb{F}_2$ und $H(X)$ ein irreduzibles Polynom von $\mathbb{F}_2[X]$ mit dem Grad $m$ ist, wobei der Parameter $d$ der Kurve ein Element von $\mathbb{F}_{2^m}[t]$ ist, wobei die Gesamtheit der Punkte der Kurve mit einem Gesetz versehen ist, das ihr eine Struktur einer additiven Gruppe, $E_d(\mathbb{F}_{2^m})$, verleiht, wobei das Verfahren auf mindestens ein kryptographisches Primitiv zurückgreift, in dem eine ganze Zahl $k$ in $kG$ umgewandelt wird, wobei $G$ ein Punkt von $E_d(\mathbb{F}_{2^m})$ mit affinen Koordinaten $(G_x, G_y)$, dem sogenannten Generatorpunkt, ist, wobei das Verfahren arithmetische Operationen mittels einer Differentialaddition auf der Kurve durchführt, wobei die Differentialaddition aufeinanderfolgende Iterationen auf einer Montgomery-Skala auf dieser Kurve verwendet, wobei jede Iteration das Element $\dfrac{1}{w(G)}$ verwendet, wobei $w(G)=G_x+G_y$ die Differentialkoordinate des Generatorpunkts ist, wobei das Verfahren **dadurch gekennzeichnet ist, dass**:

- für eine Implementierung des genannten Verfahrens mittels einer 32-Bit- oder 64-Bit-Hardwarearchitektur, der binäre Erweiterungskörper einer der folgenden Körper ist:

$$\mathbb{F}_{2^{257}}[t] = \mathbb{F}_2[X]/\left(X^{257}+X^{65}+1\right);$$

$$\mathbb{F}_{2^{431}}[t] = \mathbb{F}_2[X]/\left(X^{431}+X^{303}+X^{239}+X^{111}+1\right);$$

$$\mathbb{F}_{2^{487}}[t] = \mathbb{F}_2[X]/\left(X^{487}+X^{295}+X^{167}+X^{39}+1\right);$$

$$\mathbb{F}_{2^{569}}[t] = \mathbb{F}_2[X]/\left(X^{569}+X^{441}+X^{313}+X^{121}+1\right);$$

und
- für eine Implementierung mittels einer 32-Bit-Hardwarearchitektur kann der binäre Erweiterungskörper auch ausgewählt werden aus:

$$\mathbb{F}_{2^{223}}[t] = \mathbb{F}_2[X]/\left(X^{223}+X^{159}+1\right);$$

$$\mathbb{F}_{2^{479}}[t] = \mathbb{F}_2[X]/\left(X^{479}+X^{255}+1\right)$$

$$\mathbb{F}_{2^{521}}[t] = \mathbb{F}_2[X]/\left(X^{521}+X^{489}+1\right);$$

- wobei der Parameter $d$ der binären Edwards Kurve auf jedem dieser binären Erweiterungskörper folgendermaßen gegeben ist:

- für $\mathbb{F}_{2^{223}}[t]$ : $d = t^{64}+t^{36}+t^5+1$ ;
- für $\mathbb{F}_{2^{257}}[t]$ : $d = t^{65}+t^{31}+t^{14}+1$ ;

- für $\mathbb{F}_{2^{313}}[t]$ : $d = t^{38} + t^{33} + t^{28} + 1$ ;

- für $\mathbb{F}_{2^{431}}[t]$ : $d = t^{83} + t^{66} + t^{17} + 1$ ;

- für $\mathbb{F}_{2^{479}}[t]$ : $d = t^{73} + t^{29} + t^{3} + 1$ ;

- für $F_{2^{487}}[t]$ : $d = t^{69} + t^{33} + t^{15} + 1$ ;

- für $\mathbb{F}_{2^{521}}[t]$ : $d = t^{66} + t^{29} + t^{28} + 1$ ;

- für $\mathbb{F}_{2^{569}}[t]$ : $d = t^{56} + t^{45} + t^{41} + 1$

und dass der Kehrwert der Differentialkoordinate des erzeugenden Punktes, $\dfrac{1}{w(G)}$ , folgendermaßen verifiziert wird:

- für $\mathbb{F}_{2^{223}}[t]$ : $\dfrac{1}{w(G)} = t^{32} + 1$ ;

- für $\mathbb{F}_{2^{257}}[t]$ : $\dfrac{1}{w(G)} = t^{192}$ ;

- für $\mathbb{F}_{2^{313}}[t]$ : $\dfrac{1}{w(G)} = t^{64} + 1$ ;

- für $\mathbb{F}_{2^{431}}[t]$ : $\dfrac{1}{w(G)} = t^{64} + 1$ ;

- für $\mathbb{F}_{2^{479}}[t]$ : $\dfrac{1}{w(G)} = t^{64} + 1$ ;

- für $\mathbb{F}_{2^{487}}[t]$ : $\dfrac{1}{w(G)} = t^{64} + 1$ ;

- für $\mathbb{F}_{2^{521}}[t]$ : $\dfrac{1}{w(G)} = t^{32} + 1$ ;

- für $\mathbb{F}_{2^{569}}[t]$ : $\dfrac{1}{w(G)} = t^{64} + 1$ .

2. Kryptographisches Verfahren auf einer binären Edwards Kurve nach Anspruch 1, **dadurch gekennzeichnet, dass** die affinen Koordinaten ($G_x$, $G_y$) des Generatorpunktes in hexadezimaler Schreibweise gegeben sind durch:

- für $\mathbb{F}_{2^{223}}[t]$ :

$$G_x = 205\text{bfedd } 71\text{b0b0fd feb3345a f71cc721 790e83c4 b88094e9 a63f6d43}$$
$$G_y = 205\text{bfedd } f1\text{b0b0fd 7eb3345a f71cc721 790e83c4 b88094e9 a63f6d43}$$

- für $\mathbb{F}_{2^{257}}[t]$ :

$$G_x = \quad 1 \ 6b46e24a \ a4b12ab2 \ 289fcd34 \ 17615387 \ 810f083f \ 43419d8c \ ae38ad9a \ c640d960$$

$$G_y = \quad 1 \ 6b46e24a \ a4b12aba \ 289fcd34 \ 17615383 \ 810f083f \ 43419d8e \ ae38ad9a \ c640d968$$

- für $\mathbb{F}_{2^{313}}[t]$ :

$$G_x = \ 15c67e3 \ 024c7c27 \ 466e72a3 \ 391256e9 \ a729fc15 \ 8092053d \ 89087c0f \ 38408b21 \ 4b0ade57 \ 363ea938$$

$$G_y = \ 15c67e3 \ 024c7c27 \ 446e72a3 \ 391256e9 \ a529fc15 \ 8092053d \ 8b087c0f \ 38408b21 \ 4b0ade57 \ 363ea938$$

- für $\mathbb{F}_{2^{431}}[t]$ :

$$G_x = \quad 4e17 \ 65c1f2f6 \ 140db17d \ 5ef2f14c \ 59a38a93 \ e5b65ba9 \ acca547b \ f2cc34f3 \ d55bd85c \ cf4daeaf \ 7ca1beca \ a8ee877b \ 01f8d8ac \ ae12b210$$

$$G_y = \quad 4e17 \ 65c1f2f6 \ 140d317d \ 5ef2f14c \ 59a30a93 \ e5b65ba9 \ acca547b \ f2cc34f3 \ d55b585c \ cf4daeaf \ 7ca13eca \ a8ee877b \ 01f8d8ac \ ae12b210$$

- für $\mathbb{F}_{2^{479}}[t]$ :

$$G_x = 7bdd9f19 \ e11e888e \ 80d7c093 \ 092d208b \ 4fe996e8 \ fcbdffa2 \ 8cc90173 \ ece2c436 \ 73f1372e \ 975ba9dc \ d3a06332 \ abf15dbe \ 9b679f6c \ 63e30b88 \ 4ab93272$$

$$G_y = 3bdd9f19 \ a11e888e \ 40d7c093 \ 492d208b \ 8fe996e8 \ bcbdffa2 \ 4cc90173 \ ece2c436 \ f3f1372e \ 175ba9dc \ 53a06332 \ 2bf15dbe \ 1b679f6c \ e3e30b88 \ cab93272$$

- für $\mathbb{F}_{2^{487}}[t]$ :

$$G_x = \quad 33 \ 9b843c53 \ c409543f \ 396d39e5 \ 7efde813 \ f06e3099 \ 735004b9 \ 99b15776 \ a75a4c3a \ 22dcaf1e \ 91e261fe \ 479b89a6 \ 4d651039 \ 28195d72 \ 7bd3d157 \ 735b2071$$

$$G_y = \quad 33 \ 9b843c53 \ c40954bf \ 396d39e5 \ 7efde893 \ f06e3099 \ 73500439 \ 99b15776 \ a75a4c3a \ 22dcaf1e \ 91e261fe \ 479b89a6 \ 4d6510b9 \ 28195d72 \ 7bd3d1d7 \ 735b2071$$

- für $\mathbb{F}_{2^{521}}[t]$ :

$$G_x = \quad 16b \ 369b497b \ 805e6199 \ a342909a \ a4608cdc \ ecb10e09 \ 88ba73eb \ 1f118603 \ 9c8b1f6d \ 2a9db39b \ 1302d29d \ 9d449b9a \ a459cc5d \ 6bbb4e33 \ a1eb8fcc \ 056ce724 \ cde5aaa8$$

$$G_y = \quad 16b \ 369b4b7b \ 805e6199 \ a342909a \ a4608cdc \ ecb10e09 \ 88ba73eb \ 1f118603 \ 9c8b1f6d \ 2a9db39b \ 1302d29d \ 9d449b9a \ a459cc5d \ 6bbb4e33 \ a1eb8fcc \ 056ce724 \ cde5aaa8$$

- für $\mathbb{F}_{2^{569}}[t]$ :

$$G_x = \quad 195b22b \quad 2864ee08 \quad dd456bab \quad 1a95cdd8 \quad c7e3fd33 \quad 0fddf630 \quad f9c3bb5c$$
$$33f062b3 \quad 41c919c6 \quad bb4cbf1d \quad 4335a344 \quad ed023b31 \; 9585ea0e \; 16f03453$$
$$cc5ba9a8 \quad 6a4b28b1 \quad 6e1c72ad \quad 75f1141f$$

$$G_y = \quad 195b22b \quad 2864ee08 \quad df456bab \quad 1a95cdd8 \quad c5e3fd33 \quad 0fddf630 \quad f9c3bb5c$$
$$33f062b3 \quad 41c919c6 \quad bb4cbf1d \quad 4135a344 \quad ed023b31 \; 9785ea0e \; 16f03453$$
$$ce5ba9a8 \quad 6a4b28b1 \quad 6e1c72ad \quad 75f1141f$$

**Claims**

1. Cryptographic method on a binary Edwards curve defined by $d(x+x^2 + y+ y^2)=(x+x^2)(y+y^2)$ in the affine plane by a binary extension field $\mathbb{F}_{2^m}[t] = \mathbb{F}_2[X]/(H(X))$ in which $\mathbb{F}_2[X]$ is the polynomial ring with coefficients in $\mathbb{F}_2$ and $H(X)$ is an irreducible polynomial of $\mathbb{F}_2[X]$ with degree $m$, the parameter $d$ of the curve being an element of $\mathbb{F}_{2^m}[t]$, the set of points of the curve being provided with a law conferring an additive group structure thereon, $E_d\left(\mathbb{F}_{2^m}\right)$, said method using at least one cryptographic primitive in which an integer $k$ is transformed into $kG$ in which $G$ is a point in $E_d\left(\mathbb{F}_{2^m}\right)$, with affine coordinates $(G_x, G_y)$ called the generating point, said method implementing arithmetic operations by means of a differential addition on said curve, said differential addition using successive iterations on a Montgomery scale on said curve, each iteration using the element $\dfrac{1}{w(G)}$ in which $w(G)=G_x+G_y$ is the differential coordinate of the generating point, said method being **characterised in that**:

   - for an implementation of said method using a 32-bit or 64-bit hardware architecture, the binary extension field is one of the following fields:

   $$\mathbb{F}_{2^{257}}[t] = \mathbb{F}_2[X]/\left(X^{257} + X^{65} + 1\right);$$

   $$\mathbb{F}_{2^{431}}[t] = \mathbb{F}_2[X]/\left(X^{431} + X^{303} + X^{239} + X^{111} + 1\right);$$

   $$\mathbb{F}_{2^{487}}[t] = \mathbb{F}_2[X]/\left(X^{487} + X^{295} + X^{167} + X^{39} + 1\right);$$

   $$\mathbb{F}_{2^{569}}[t] = \mathbb{F}_2[X]/\left(X^{569} + X^{441} + X^{313} + X^{121} + 1\right);$$

   and
   - for an implementation using a 32-bit hardware architecture, the binary extension field can also be chosen from among:

   $$\mathbb{F}_{2^{223}}[t] = \mathbb{F}_2[X]/\left(X^{223} + X^{159} + 1\right);$$

   $$\mathbb{F}_{2^{479}}[t] = \mathbb{F}_2[X]/\left(X^{479} + X^{255} + 1\right)$$

   $$\mathbb{F}_{2^{521}}[t] = \mathbb{F}_2[X]/\left(X^{521} + X^{489} + 1\right);$$

- the parameter d of the binary Edwards curve on each of these binary extension fields being given by:

- for $\mathbb{F}_{2^{223}}[t]$ : $d = t^{64} + t^{36} + t^5 + 1$ ;

- for $\mathbb{F}_{2^{257}}[t]$ : $d = t^{65} + t^{31} + t^{14} + 1$;

- for $\mathbb{F}_{2^{313}}[t]$ : $d = t^{38} + t^{33} + t^{28} + 1$;

- for $\mathbb{F}_{2^{431}}[t]$ : $d = t^{83} + t^{66} + t^{17} + 1$;

- for $\mathbb{F}_{2^{479}}[t]$ : $d = t^{73} + t^{29} + t^3 + 1$;

- for $\mathbb{F}_{2^{487}}[t]$ : $d = t^{69} + t^{33} + t^{15} + 1$;

- for $\mathbb{F}_{2^{521}}[t]$ : $d = t^{66} + t^{29} + t^{28} + 1$;

- for $\mathbb{F}_{2^{569}}[t]$ : $d = t^{56} + t^{45} + t^{41} + 1$

and that the inverse of the differential coordinate of the generating point, $\dfrac{1}{w(G)}$ satisfies:

- for $\mathbb{F}_{2^{223}}[t] : \dfrac{1}{w(G)} = t^{32} + 1$ ;

- for $\mathbb{F}_{2^{257}}[t] : \dfrac{1}{w(G)} = t^{192}$ ;

- for $\mathbb{F}_{2^{313}}[t] : \dfrac{1}{w(G)} = t^{64} + 1$ ;

- for $\mathbb{F}_{2^{431}}[t] : \dfrac{1}{w(G)} = t^{64} + 1$ ;

- for $\mathbb{F}_{2^{479}}[t] : \dfrac{1}{w(G)} = t^{64} + 1$ ;

- for $\mathbb{F}_{2^{487}}[t] : \dfrac{1}{w(G)} = t^{64} + 1$ ;

- for $\mathbb{F}_{2^{521}}[t] : \dfrac{1}{w(G)} = t^{32} + 1$ ;

- for $\mathbb{F}_{2^{569}}[t] : \dfrac{1}{w(G)} = t^{64} + 1$ .

2. Cryptographic method on a binary Edwards curve according to claim 1, **characterised in that** the affine coordinates $(G_x, G_y)$ of the generating point are given as follows, in hexadecimal notation:

- for $\mathbb{F}_{2^{223}}[t]$ :

$$G_x = 205\text{bfedd } 71\text{b0b0fd feb3345a f71cc721 790e83c4 b88094e9 a63f6d43}$$
$$G_y = 205\text{bfedd } \text{f1b0b0fd 7eb3345a f71cc721 790e83c4 b88094e9 a63f6d43}$$

- for $\mathbb{F}_{2^{257}}[t]$ :

$$G_x = \quad 1\; 6b46e24a\; a4b12ab2\; 289fcd34\; 17615387\; 810f083f\; 43419d8c$$
$$ae38ad9a\; c640d960$$
$$G_y = \quad 1\; 6b46e24a\; a4b12aba\; 289fcd34\; 17615383\; 810f083f\; 43419d8c$$
$$ae38ad9a\; c640d968$$

- for $\mathbb{F}_{2^{313}}$ [t] :

$$G_x = \quad 15c67e3\; 024c7c27\; 466e72a3\; 391256e9\; a729fc15\; 8092053d\; 89087c0f$$
$$38408b21\; 4b0ade57\; 363ea938$$
$$G_y = \quad 15c67e3\; 024c7c27\; 446e72a3\; 391256e9\; a529fc15\; 8092053d\; 8b087c0f$$
$$38408b21\; 4b0ade57\; 363ea938$$

- for $\mathbb{F}_{2^{431}}$ [t] :

$$G_x = \quad 4e17\; 65c1f2f6\; 140db17d\; 5ef2f14c\; 59a38a93\; e5b65ba9\; acca547b$$
$$f2cc34f3\; d55bd85c\; cf4daeaf\; 7ca1beca\; a8ee877b\; 01f8d8ac\; ae12b210$$
$$G_y = \quad 4e17\; 65c1f2f6\; 140d317d\; 5ef2f14c\; 59a30a93\; e5b65ba9\; acca547b$$
$$f2cc34f3\; d55b585c\; cf4daeaf\; 7ca13eca\; a8ee877b\; 01f8d8ac\; ae12b210$$

- for $\mathbb{F}_{2^{479}}$ [t] :

$$G_x = 7bdd9f19\; e11e888e\; 80d7c093\; 092d208b\; 4fe996e8\; fcbdffa2\; 8cc90173$$
$$ece2c436\; 73f1372e\; 975ba9dc\; d3a06332\; abf15dbe\; 9b679f6c\; 63e30b88$$
$$4ab93272$$
$$G_y = 3bdd9f19\; a11e888e\; 40d7c093\; 492d208b\; 8fe996e8\; bcbdffa2\; 4cc90173$$
$$ece2c436\; f3f1372e\; 175ba9dc\; 53a06332\; 2bf15dbe\; 1b679f6c\; e3e30b88$$
$$cab93272$$

- for $\mathbb{F}_{2^{487}}$ [t] :

$$G_x = \quad 33\; 9b843c53\; c409543f\; 396d39e5\; 7efde813\; f06e3099\; 735004b9$$
$$99b15776\; a75a4c3a\; 22dcaf1e\; 91e261fe\; 479b89a6\; 4d651039\; 28195d72$$
$$7bd3d157\; 735b2071$$
$$G_y = \quad 33\; 9b843c53\; c40954bf\; 396d39e5\; 7efde893\; f06e3099\; 73500439$$
$$99b15776\; a75a4c3a\; 22dcaf1e\; 91e261fe\; 479b89a6\; 4d6510b9\; 28195d72$$
$$7bd3d1d7\; 735b2071$$

- for $\mathbb{F}_{2^{52}}$ [t] :

$$G_x = \quad 16b\; 369b497b\; 805e6199\; a342909a\; a4608cdc\; ecb10e09\; 88ba73eb$$
$$1f118603\; 9c8b1f6d\; 2a9db39b\; 1302d29d\; 9d449b9a\; a459cc5d\; 6bbb4e33$$
$$a1eb8fcc\; 056ce724\; cde5aaa8$$
$$G_y = \quad 16b\; 369b4b7b\; 805e6199\; a342909a\; a4608cdc\; ecb10e09\; 88ba73eb$$
$$1f118603\; 9c8b1f6d\; 2a9db39b\; 1302d29d\; 9d449b9a\; a459cc5d\; 6bbb4e33$$
$$a1eb8fcc\; 056ce724\; cde5aaa8$$

- for $\mathbb{F}_{2^{569}}$ [t] :

$$G_x = \begin{array}{llllll} 195b22b & 2864ee08 & dd456bab & 1a95cdd8 & c7e3fd33 & 0fddf630 & f9c3bb5c \\ 33f062b3 & 41c919c6 & bb4cbf1d & 4335a344 & ed023b31 & 9585ea0e & 16f03453 \\ cc5ba9a8 & 6a4b28b1 & 6e1c72ad & 75f1141f \end{array}$$

$$G_y = \begin{array}{llllll} 195b22b & 2864ee08 & df456bab & 1a95cdd8 & c5e3fd33 & 0fddf630 & f9c3bb5c \\ 33f062b3 & 41c919c6 & bb4cbf1d & 4135a344 & ed023b31 & 9785ea0e & 16f03453 \\ ce5ba9a8 & 6a4b28b1 & 6e1c72ad & 75f1141f \end{array}$$

recherche des corps d'extension binaire
$$\mathsf{F}_{2^m}$$
et des polynômes irréductibles
$$H(X)$$
adaptés à une implementation sur architecture à
*wordize* bits

— 110

pour chaque corps d'extension binaire
recherche d'au moins un paramètre $d$
de la courbe BEC permettant de satisfaire à des
critères de sécurité, en particulier:

$$\left| E_d\left(\mathsf{F}_{2^m}\right)\right| = 2^s n \qquad \left| E_d^{tw}\left(\mathsf{F}_{2^m}\right)\right| = 2^{s'} n' \qquad s,s' \in \{1,2,3\}$$

— 120

sélection pour chaque corps d'extension binaire,
d'un paramètre $d$
permettant d'obtenir un point générateur $G$
optimal, d'ordre $s$ dans $E_d\left(\mathsf{F}_{2^m}\right)$
et dont l'inverse de la coordonnée différentielle
$\dfrac{1}{w(G)}$ possède un faible poids de Hamming

— 130

# FIGURE UNIQUE

# EP 3 457 626 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description

- **D. HANKERSON ; A. MENEZES ; S. VANSTONE.** Guide to Elliptic Curve Cryptography. Springer, 2004
- **D.J. BERNSTEIN et al.** Binary Edwards Curves. *Lecture Notes in Computer Science,* 2008, vol. 514, 244-265
- **B. KOZIEL.** Low-resource and fast elliptic curve implementations over Binary Edwards Curves. Rochester Institute of Technology, 2016
- **D.J. BERNSTEIN.** Batch binary Edwards. *Lecture Notes in Computer Science,* 2009, vol. 5677, 317-336